# EUROPEAN PATENT APPLICATION

(11) **EP 4 618 249 A1**
(43) Date of publication of application: **17.09.2025**
(21) Application number: 24219137.7
(22) Date of filing: 11.12.2024
(51) Int. Cl.: H01M 10/647, H01M 10/658, H01M 50/209, H01M 10/6555

(54) **BATTERY MODULE**

(30) Priority: 11.03.2024 KR 20240033935
(71) Applicant: SAMSUNG SDI CO., LTD., Yongin-si, Gyeonggi-do 17084 (KR)
(72) Inventor: Kim, Cheorlhwan, 17084 Yongin-Si, Gyeonggi-do (KR); Park, Jongtaek, 17084 Yongin-Si, Gyeonggi-do (KR)
(74) Representative: Gulde & Partner

(57) **Abstract**

A simplified battery module includes a cell stack including a target cell subjected to heating and an adjacent cell positioned adjacent to the target cell, an insulating sheet between the target cell and the adjacent cell, a plurality of plates configured to support outermost sides of the cell stack, and a barrier on a top of the cell stack, the barrier being configured to block heat transfer through a top portion of the cell stack to the adjacent cell.

## Description

### BACKGROUND

### 1. Field

The present disclosure relates to a simplified battery module.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

According to an embodiment, a simplified battery module may include a cell stack configured to include a target cell subjected to heating and an adjacent cell disposed adjacent to the target cell, an insulating sheet disposed between the target cell and the adjacent cell, a plurality of plates configured to support an outermost side of the cell stack, and a barrier disposed on top of the cell stack to block heat transfer through a top portion of the cell stack to the adjacent cell.

According to an embodiment, the barrier may include a plate-shaped barrier section positioned above between the target cell and the adjacent cell to block heat transfer from a top portion of the target cell to a top portion of the adjacent cell.

According to an embodiment, the barrier may include barrier coupling portions for coupling to at least one of the plates.

According to an embodiment, each of the barrier coupling portions may include a through-hole.

According to an embodiment, the barrier coupling portions may be fastened to at least one of the plates via a fastener.

According to an embodiment, the barrier coupling portions may be coupled to side plates among the plates supporting opposite sides of the cell stack.

According to an embodiment, the barrier may further include a barrier coupling section bent from the barrier section, the barrier coupling section includes a barrier coupling portion for coupling to at least one of the plates.

According to an embodiment, the plurality of plates may include side plates, wherein each of the side plates includes a body positioned at and configured to support a corresponding one of opposite sides of the cell stack, and a first coupling section configured to extend from a portion of the body and provided with a first coupling portion, wherein at least a portion of the barrier coupling section of the barrier is in contact with at least a portion of the first coupling section of the side plate, and the barrier coupling portion of the barrier and the first coupling portion of the side plate are fastened to each other via a fastener.

According to an embodiment, the adjacent cell may include a first adjacent cell disposed adjacent to a first side of the target cell and a second adjacent cell disposed adjacent to a second side of the target cell, and the barrier may include a plate-shaped first barrier section positioned above between the target cell and the first adjacent cell, and a plate-shaped second barrier section positioned above between the target cell and the second adjacent cell.

According to an embodiment, the barrier may include at least one barrier coupling section connected to the first barrier section and the second barrier section.

According to an embodiment, the plates may include side plates supporting opposite sides of the cell stack, and the barrier may be integrated with the side plates.

According to an embodiment, the simplified battery module may further include a support supporting a bottom portion of at least one of the plates, wherein as the support supports the bottom portion of at least one of the plates, a bottom surface of the cell stack is spaced from a reference surface on which the simplified battery module is placed.

According to an embodiment, the simplified battery module may further include a bottom barrier disposed below the cell stack to block heat transfer through a bottom portion of the cell stack to the adjacent cell.

According to an embodiment, a simplified battery module may include a cell stack configured to include a target cell subjected to heating and an adjacent cell disposed adjacent to the target cell, an insulating sheet disposed between the target cell and the adjacent cell, a plurality of plates configured to support an outermost side of the cell stack, and a support configured to support a bottom portion of at least one of the plates, wherein as the support supports the bottom portion of at least one of the plates, a bottom surface of the cell stack is spaced from a reference surface on which the simplified battery module is placed.

According to an embodiment, at least a portion of the bottom surface of the cell stack may be exposed to the outside, and an empty space may be provided below at least an exposed portion of the bottom surface of the cell stack.

According to an embodiment, the simplified battery module may further include a bottom barrier disposed below the cell stack to block heat transfer through a bottom portion of the cell stack to the adjacent cell.

According to an embodiment, the support may include at least one column spacing at least one of the plates from the reference surface.

According to an embodiment, the support may include the two or more columns configured to space at least one of the plates from the reference surface, and a support bar connected to at least one of the two or more columns, wherein at least one of the plates is placed on the support bar.

According to an embodiment, the support may include a coupling portion for coupling to at least one of the plates. According to an embodiment, the support bar may include a support bar coupling portion for coupling to at least one of the plates.

According to an embodiment, the plates may include side plates, wherein each of the side plates includes a body configured to support a corresponding one of opposite sides of the cell stack, and a second coupling section configured to extend from a portion of the body and provided with a second coupling portion, wherein at least a portion of the second coupling section of the side plate is in contact with at least a portion of the support bar, and the support bar coupling portion of the support bar and the second coupling portion of the side plate are fastened to each other via a fastener.

According to an embodiment, the plates may include end plates, wherein each of the end plates includes a body configured to support an outermost side of the cell stack in a cell arrangement direction, and an end plate coupling section bent from a portion of the body and provided with an end plate coupling portion, wherein at least a portion of the end plate coupling section of the end plate is in contact with at least a portion of the support bar, and the support bar coupling portion of the support bar and the end plate coupling portion of the end plate are fastened via a fastener.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to the present specification illustrate embodiments of the present disclosure, and further describe aspects and features of the present disclosure together with the detailed description of the present disclosure. Thus, the present disclosure should not be construed as being limited to the drawings:
FIG. 1 illustrates a perspective diagram showing an example of a battery cell 100 according to embodiments of the present disclosure.
FIG. 2 illustrates a perspective view showing an example of a simplified battery module according to embodiments of the present disclosure.
FIG. 3 illustrates a perspective diagram showing an example of the simplified battery module to which a barrier and a support are applied according to embodiments of the present disclosure.
FIGS. 4 and 5 illustrate perspective and development diagrams respectively showing an example of a barrier according to embodiments of the present disclosure.
FIG. 6 illustrates a development diagram showing a side plate to which the barrier is coupled according to embodiments of the present disclosure.
FIG. 7 illustrates a development diagram showing an example of a barrier integrated with side plates according to embodiments of the present disclosure.
FIG. 8 illustrates a perspective diagram showing an example of a barrier according to embodiments of the present disclosure.
FIG. 9 illustrates an example in which the barrier in FIG. 8 is applied to a simplified battery module.
FIG. 10 illustrates a perspective diagram showing an example of the support according to embodiments of the present disclosure.
FIG. 11 illustrates an example in which the support in FIG. 10 is applied to a simplified battery module.
FIG. 12 illustrates an example of a support according to various embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

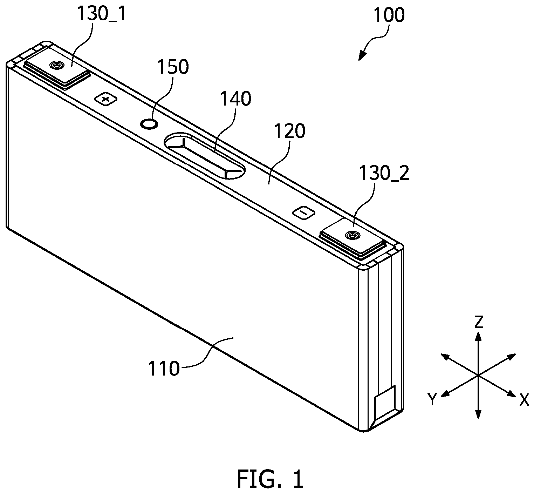

FIG. 1 illustrates a perspective diagram showing an example of a battery cell 100 according to embodiments of the present disclosure.

Referring to FIG. 1, the battery cell 100 may include an electrode assembly including electrodes (e.g., at least one wound or laminated electrode assembly including a separator, i.e., an insulator, provided between a positive electrode and a negative electrode), a case 110 containing the electrode assembly, and a cap plate 120 coupled to an opening of the case 110. The battery cell 100 shown in FIG. 1 may be a secondary battery cell.

Each of the positive electrode and the negative electrode in the electrode assembly may include a current collector made of a thin metal foil having a coated portion on which an active material is coated and an uncoated portion on which an active material is not coated. The positive electrode and the negative electrode are wound after interposing the separator, which is an insulator, therebetween. However, the present disclosure is not limited thereto, and the electrode assembly may have a structure in which a positive electrode and a negative electrode each made of a plurality of sheets, are alternately stacked with a separator interposed therebetween. In addition, the electrode assembly may have any structure including electrodes.

The case 110 may form the overall contour of the battery cell 100, and may be formed of a conductive metal, e.g., aluminum (Al), an Al alloy, or nickel (Ni)-plated steel. Further, the case 110 may provide a space in which the electrode assembly is housed. In FIG. 1, the case 110 is shown as a prismatic case and the battery cell 100 is shown as a prismatic battery cell, but the battery cell 100 may have any suitable shape, e.g., a prismatic shape, a cylindrical shape, or a pouch shape.

The cap plate 120 may be coupled to the opening of the case 110 to seal the case 110. The case 110 and the cap plate 120 may be formed of a conductive material. In an embodiment, the top end of the case 110 may be open, and the cap plate 120 may seal the open top end of the case 110.

A positive electrode terminal 130_1 electrically connected to a negative electrode and a negative electrode terminal 130_2 electrically connected to a positive electrode may be coupled to the cap plate 120. For example, the positive and negative terminals 130_1 and 130_2 may be disposed to protrude outwardly through the cap plate 120. The positions of the positive and negative terminals 130_1 and 130_2 may be changed.

According to an embodiment, a vent 140 may be formed on at least one side of the battery cell 100 (e.g., the top side of the battery cell 100, i.e., the cap plate 120, in the shown example). The vent 140 may be configured to open in a case where an internal pressure equal to or higher than a predetermined threshold pressure is detected in the battery cell 100.

In this case, the threshold pressure may be set differently depending on the application, material, purpose, etc. of the battery. In an example, a relatively high threshold pressure may be set for a battery having a short charge-discharge cycle in use in which the internal pressure of the case 110 is maintained at a higher pressure on average compared to other applications. In another example, a relatively high threshold pressure may be set for a battery formed of a material and/or manufactured in a design having relatively high heat and/or pressure resistance. In a different example, a relatively low threshold pressure may be set for a battery formed of a material and/or manufactured in a design having relatively low heat and/or pressure resistance. In addition or in another example, the vent 140 may be configured to open in a case where the internal temperature exceeds a predetermined threshold temperature. With this configuration, the vent 140 may prevent explosion of the battery cell 100 or prevent a chain exothermic reaction of other battery cells arranged around the battery cell 100.

In an embodiment, the cap plate 120 may include an electrolyte inlet 150. For example, the electrolyte inlet 150 may be a through-hole provided in the cap plate 120, and may be formed such that electrolyte is injected into the case 110 through the electrolyte inlet 150 after the cap plate 120 is coupled and sealed to an opening in the case 110. The electrolyte inlet 150 may be sealed with a sealing member after the electrolyte is injected.

The battery cell 100 may be a lithium (Li) battery cell, a sodium (Na) battery cell, or the like. However, the battery cell 100 may include any battery capable of repeatedly providing electricity by being charged and discharged. In an embodiment in which the battery cell 100 is a Li battery cell, the battery cell 100 may be used in an electric vehicle (EV) due to superior lifetime characteristics and superior high rate characteristics. For example, the battery cell 100 may be used in a hybrid vehicle such as a plug-in hybrid electric vehicle (PHEV). In addition, the Li battery cell may be used in a field in which a large amount of power storage is used. For example, the Li battery cell may be used in electric bicycles, power tools, and the like.

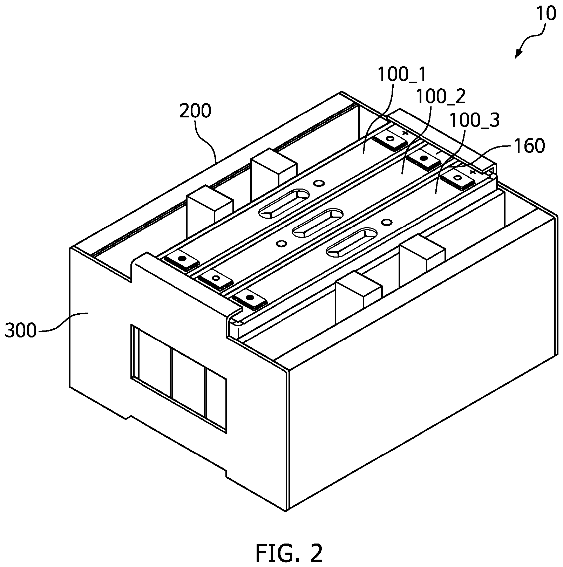

FIG. 2 illustrates a perspective view showing an example of a simplified battery module 10 according to embodiments of the present disclosure. According to an embodiment, the simplified battery module 10 refers to a battery module configured to be the same as or similar to a real battery module in order to evaluate the heat propagation blocking performance of the insulating sheet disposed between adjacent battery cells (e.g., the simplified battery module 10 may be a testing battery module with a same structure as a battery module that is used for testing).

According to an embodiment, the simplified battery module 10 may include a cell stack including a plurality of battery cells 100 and a module housing. In the cell stack, the battery cells 100 may be stacked in one direction. For example, in the cell stack, the battery cells 100 may be arranged in a first direction such that the wide sides thereof face each other. In an embodiment, each of the battery cells 100 may include a vent on the top side thereof. For example, each of the battery cells 100 may be the battery cell shown in FIG. 1. The number and arrangement of the battery cells 100 are not limited to the structure shown in FIG. 2, e.g., the configuration, number, and arrangement of the battery cells 100 may be changed as appropriate for the purpose of evaluating the performance of the insulating sheet. The battery cell 100 may be a circular battery cell, a prismatic battery cell, a pouch battery cell, or the like, depending on the shape of the battery.

According to an embodiment, an insulating sheet 160 may be disposed between adjacent battery cells 100. For example, the insulating sheet 160 may be provided between the wide sides of two adjacent battery cells (e.g., between a first cell 100_1 and a second cell 100_2).

The insulating sheet 160 may include at least one of an insulating material to prevent heat from propagating, a flame retardant material to prevent fire from propagating, or a non-combustible material. For example, the insulating sheet 160 may include mica capable of blocking heat propagation between two adjacent battery cells (e.g., between the first cell 100_1 and the second cell 100_2). In addition, the insulating sheet 160 may prevent adjacent battery cells from directly contacting each other, thereby maintaining electrical independence of the battery cells 100.

The cell stack may be contained in a receiving space of the module housing. According to an embodiment, the module housing may include a plurality of plates 200 and 300 supporting the outermost sides of the cell stack. For example, the plates 200 and 300 may include end plates 200 supporting the outermost sides of the cell stack in the cell arrangement direction of the cell stack and side plates 300 supporting two sides of the cell stack. According to an embodiment, the module housing may not be applied to at least a portion of the bottom surface of the cell stack. That is, at least a portion of the bottom surface of the cell stack may be exposed to the outside.

The module housing (e.g., the end plates 200 and side plates 300 supporting the outermost sides of the cell stack) may be formed of a rigid material to maintain the strength of the simplified battery module 10. For example, the module housing may be formed of an aluminum (Al) extrusion. In another example, the module housing may be formed of any material suitable for maintaining the strength of the simplified battery module 10.

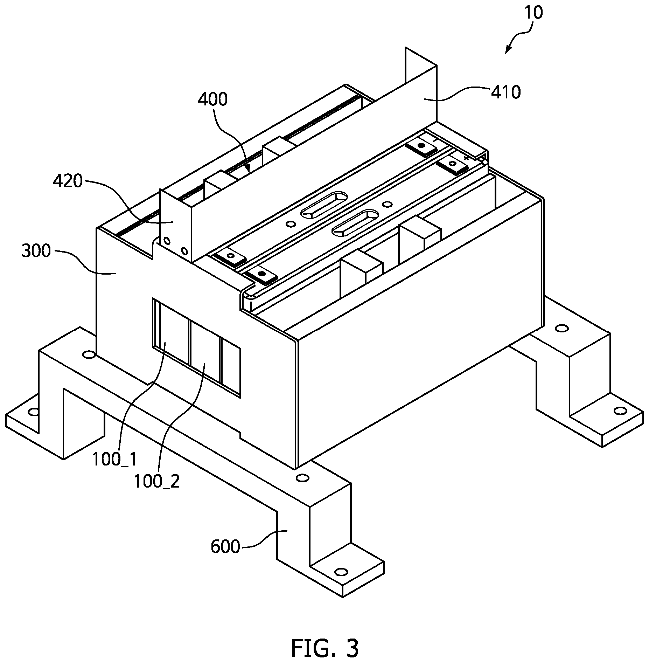

FIG. 3 illustrates a perspective diagram showing an example of the simplified battery module 10 to which a barrier 400 and a support 600 are applied according to embodiments of the present disclosure.

The battery cell 100 may generate large amounts of heat during charging/discharging, and the battery cell 100 may be subjected to an abnormal operating condition, also known as a thermal runaway or a thermal event. According to an embodiment, the heat propagation blocking performance of the insulating sheet disposed between the first cell 100_1 (e.g., a target cell) and the second cell 100_2 (e.g., a cell adjacent to the target cell) of the simplified battery module 10 may be evaluated by heating the first cell 100_1 and observing effects on the second cell 100_2 disposed adjacent to the first cell 100_1 (e.g., observing a highest temperature of the second cell (i.e., adjacent cell) if the first cell (i.e., target cell) is heated to a predetermined temperature and a time for the temperature of the second cell to reach a threshold temperature). In addition, each time that the heat propagation blocking performance of the insulating sheet is evaluated, different amounts of heat may be transferred through the bottom portion and the top portion of the cell. For example, the degree of heat transferred through the bottom portion of the cell may vary depending on the degree of adhesion between the reference surface on which the simplified battery module 10 is placed during the evaluation and the bottom surface of the simplified battery module 10. Further, the amount of heat transferred through the top portion of the cell may vary depending on, e.g., the angle or level of venting of ejected matter such as sparks, flames, and venting gas.

Accordingly, according to an embodiment of the present disclosure, by maximizing the blocking of heat transfer through the bottom portion and/or the top portion of the battery cell 100 (e.g., so heat propagation may be concentrated between adjacent battery cells through wide sides thereof facing the insulating sheet), the reliability of the evaluation of the thermal propagation blocking performance of the insulating sheet may be improved by measuring the heat transferred between adjacent surfaces of the battery cell 100. In this regard, the simplified battery module 10 may include the barrier 400 disposed on top of the cell stack and/or the support 600 supporting the bottom portion of at least one of the plates supporting the outermost sides of the cell stack.

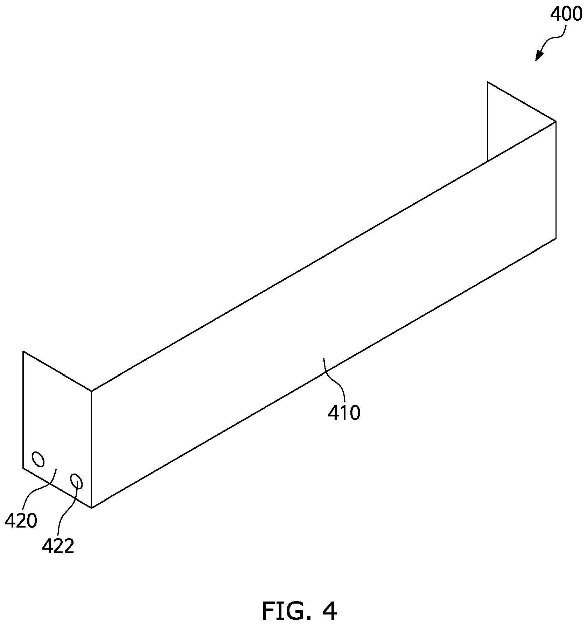

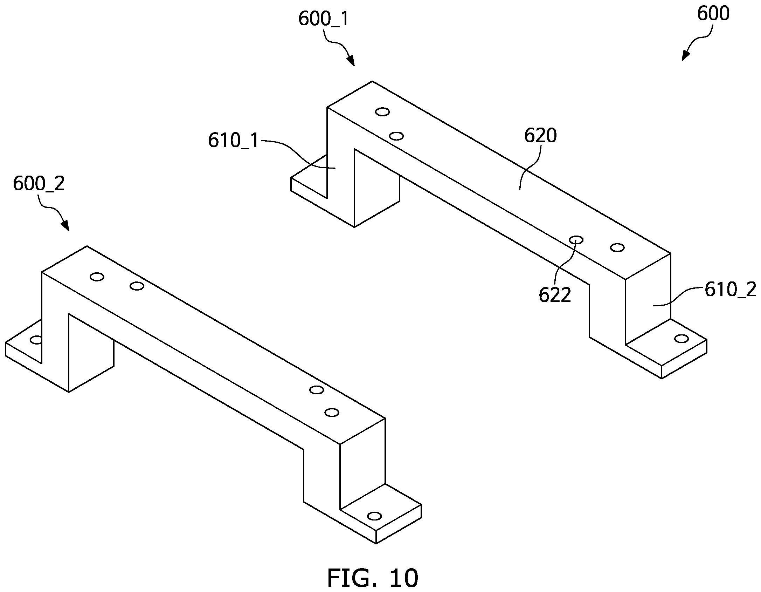

The barrier 400 may block heat transfer from the first cell 100_1 to the second cell 100_2 through the top portion of the cell. This will be described in more detail below with reference to FIGS. 4 to 9. In addition, the support 600 may block heat transfer from the first cell 100_1 to the second cell 100_2 through the bottom surface of the cell by spacing the bottom surface of the cell away from the reference surface on which the simplified battery module 10 rests. This will be described in more detail later with reference to FIGS. 10 to 12.

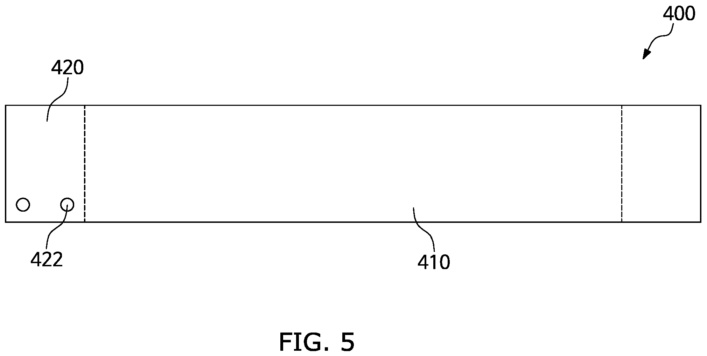

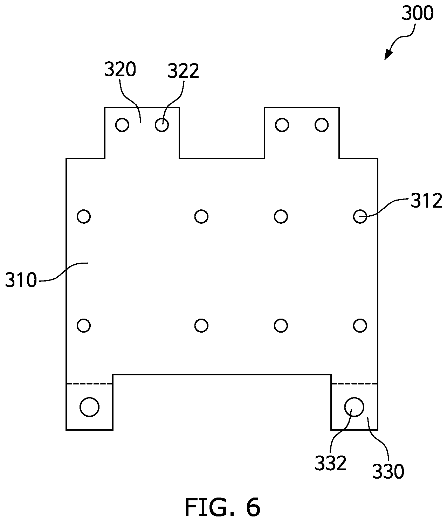

FIGS. 4 and 5 illustrate perspective and development diagrams respectively showing an example of the barrier 400 according to embodiments of the present disclosure, and FIG. 6 illustrates a development diagram showing the side plate 300 to which the barrier 400 is coupled according to embodiments of the present disclosure.

Referring to FIGS. 4 and 5, the barrier 400 may include a plate-shaped barrier section 410, e.g., the barrier section 410 may have a shape of a rectangular and flat sheet or board. According to an embodiment, the barrier section 410 may be positioned above and between the first cell 100_1 and the second cell 100_2, e.g., the barrier section 410 may be positioned above the first and second cells 100_1 and 100_2 at a position vertically overlapping a region between the first and second cells 100_1 and 100_2. For example, the barrier section 410 may be arranged to extend lengthwise along and in parallel to a longitudinal direction of the first and second cells 100_1 and 100_2 (FIG. 3). For example, the barrier section 410 may be positioned on top of or above an insulating sheet disposed between the first cell and the second cell, e.g., the barrier section 410 may overlap a top of the insulating sheet (along a vertical direction that is normal to the bottoms of the first and second cells 100_1 and 100_2). The barrier section 410 may block heat transfer from the top portion of the first cell (i.e., a target cell subjected to heating) to the top portion of the second cell (i.e., an adjacent cell). The barrier section 410 may have a height sufficient to block heat transferred through the top side. For example, the barrier section 410 may have a height of 50 mm or more.

According to an embodiment, the barrier 400 may further include a coupling section 420. For example, the coupling section 420 may be bent from the barrier section 410, e.g., two coupling sections 420 may be bent from respective opposite ends of the barrier section 410. For example, the coupling section 420 may be bent about 90° from the barrier section 410.

According to an embodiment, the coupling section 420 may include coupling portions 422 for coupling with other components of the simple battery module. For example, the coupling portions 422 for coupling with at least one of the plates supporting the outermost sides of the cell stack may be provided on lower portions of the coupling section 420, e.g., on portions of the coupling section 420 adjacent to the cell 100. For example, the coupling portions 422 may be through-holes, and may be fastened to at least one of the plates (e.g., side plates 300) using a fastening means (e.g., a fastener). In an embodiment, the coupling section 420 may not only include the coupling portions 422, but may also function to work in concert with the barrier section 410 to block heat transfer from the top portion of the first cell (i.e., the target cell) to the top portion of a second cell (e.g., the adjacent cell).

According to an embodiment, the barrier 400 may be coupled to the side plates 300 supporting opposite sides of the cell stack (FIG. 3). Referring to FIG. 6, the side plate 300 may include a body 310 supporting the opposite sides of the cell stack and first coupling sections 320 extending from portions of the body 310 and provided with first coupling portions 322. For example, referring to FIGS. 3 and 4, the first coupling sections 320 may be bent from at least a portion of the body 310 toward the cell stack (e.g., to at least partially overlap the tops of the first and second cells 100_1 and 100_2), so the barrier 400 may be positioned on and coupled to the bent first coupling sections 320 (e.g., the barrier section 410 of the barrier 400 may extend continuously between two opposite side plate 300 while completely overlapping and covering an insulation sheet between the first and second cells 100_1 and 100_2). According to an embodiment, the body 310 of the side plate 300 may include one or more through-holes 312 therethrough for heat dissipation or the like.

According to an embodiment, the first coupling portions 322 provided in the first coupling section 320 may be through-holes. Further, at least a portion of the coupling section 420 of the barrier 400 may be in contact with at least a portion of the first coupling section 320 of the side plate 300, and the coupling portions 422 of the barrier 400 and the first coupling portions 322 of the side plate 300 may be fastened to each other using fastening means. For example, the fastening means, e.g., bolts, may pass through and be fastened to the through-holes of the barrier 400 and the through-holes of the side plate 300. It has been shown and described in FIGS. 4 to 6 and in the description above that the coupling portions 422 of the barrier 400 and the first coupling portions 322 of the side plate 300 are through-hole and are fastened using fastening means, e.g., bolts, but the coupling portions 422 and 322 may be coupled by any suitable coupling method, e.g., welding or the like.

According to an embodiment, the side plate 300 may further include second coupling sections 330 respectively including a second coupling portion 332. The second coupling sections 330 may be bent from at least a portion of the body 310. For example, the second coupling sections 330 may be bent approximately 90° in an inward direction (in the direction toward the cell stack) from at least a portion of the body 310. The second coupling sections 330 and the second coupling portions 332 of the side plate 300 may be used for coupling to the support to be described later with reference to FIG. 10 to 12.

According to an embodiment, the barrier 400 may include at least one of an insulating material to prevent heat from propagating, a flame retardant material to prevent fire from propagating, or a non-combustible material. Additionally or alternatively, the barrier 400 may include a material having high heat resistance that does not deform or break down at high temperatures. For example, the barrier may include a material that does not melt even when exposed to temperatures of 700 degrees Celsius or higher for 30 seconds or longer (e.g. stainless steel).

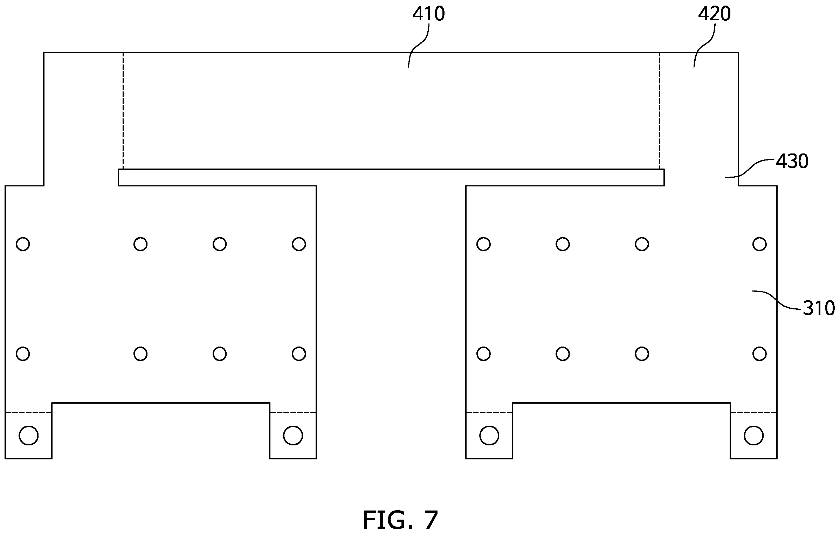

FIG. 7 illustrates a development diagram showing an example of a barrier integrated (i.e., integral) with side plates according to embodiments of the present disclosure. According to an embodiment, the barrier may be provided integrally with the side plates. Most of the above description of the barrier and side plates with reference to FIGS. 4 to 6 may be applied equally/similarly to the integral barrier in FIG. 7. Accordingly, in the following description of FIG. 7, the above description of the barrier and the side plates with reference to FIGS. 4 to 6 will be omitted or abbreviated, and the description will focus on the modified configuration.

Referring to FIG. 7, the barrier may be formed integrally (e.g., as a single and seamless structure made of a same material) with two side plates that support opposite sides of the cell stack, respectively. The barrier formed integrally with the side plates may include a plate-shaped barrier section 410 and coupling sections 420 bent approximately 90° from the barrier section 410 (e.g., so the coupling sections 420 at opposite sides of the barrier section 410 may be connected to and formed integrally with the two side plates, respectively). The barrier section 410 may be positioned above and between the target cell and the adjacent cell to block heat transfer from the top portion of the target cell to the top portion of the adjacent cell. Further, the coupling sections 420 may be coupled to the body 310 of the side plate. For example, portions of the coupling sections 420 may extend and portions of the bodies 310 of the side plates may extend to form connections 430. The barrier and the side plates may be integrally connected by the connections 430.

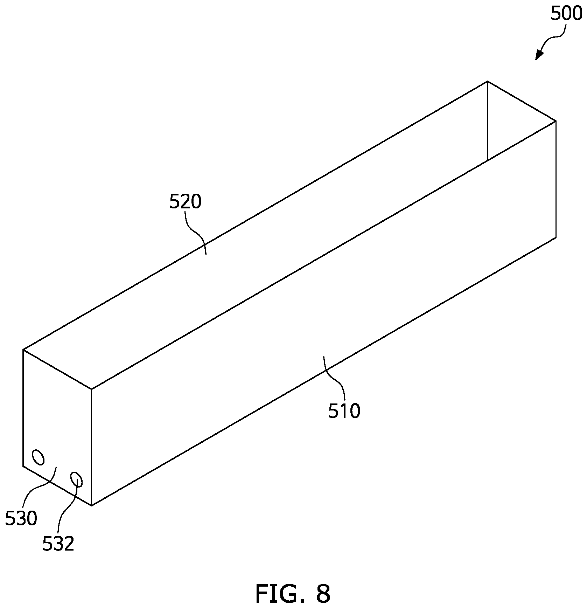

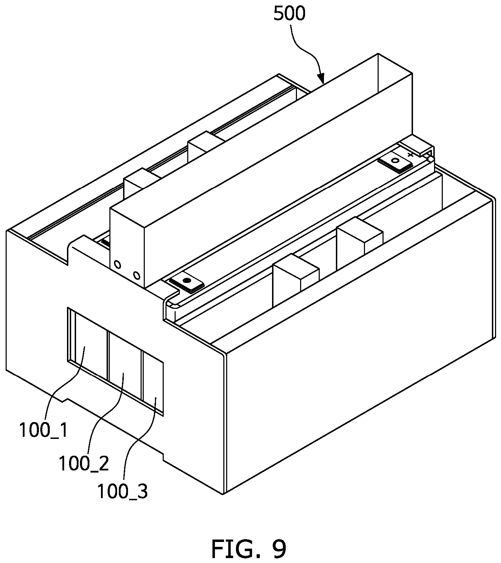

FIG. 8 illustrates a perspective diagram showing an example of a barrier 500 according to embodiments of the present disclosure, and FIG. 9 illustrates an example in which the barrier 500 in FIG. 8 is applied to a simplified battery module. Most of the above description of the barrier with reference to FIGS. 4 to 6 may be applied equally/similarly to the barrier 500 in FIG. 8. Accordingly, in the following description of FIG. 8, the above description with reference to FIGS. 4 to 6 will be omitted or abbreviated, and the description will focus on the modified configuration.

According to an embodiment, the barrier 500 may be configured to block heat transfer from the second cell 100_2 through the top portion to the first and third cells 100_1 and 100_3 disposed adjacent to either side of the second cell 100_2. For example, the barrier 500 may include a plate-shaped first barrier section 510 and a plate-shaped second barrier section 520. The first barrier section 510 may be positioned above and between the first and second cells 100_1 and 100_2 disposed adjacent to each other, and the second barrier section 520 may be positioned above and between the second and third cells 100_2 and 100_3 disposed adjacent to each other (with the second cell 100_2 being between the first and third cells 100_1 and 100_3). The first barrier section 510 and the second barrier section 520 may block heat transfer from the second cell 100_2 through the top portion to the first and third cells 100_1 and 100_3 disposed adjacent to the opposite sides of the second cell 100_2.

According to an embodiment, the barrier 500 may further include coupling sections 530 connected to both the first barrier section 510 and the second barrier section 520. For example, the coupling sections 530 may be bent from the first barrier section 510 and the second barrier section 520. For example, each of the coupling sections 530 may be bent about 90° from the first barrier section 510 and the second barrier section 520.

According to an embodiment, each of the coupling sections 530 may include coupling portions 532 for coupling to other components of the simplified battery module. For example, the coupling portions 532 for coupling to at least one of the plates supporting the outermost sides of the cell stack may be provided on the lower portion of each of the coupling sections 530. For example, the coupling portions 532 may be through-holes, and may be fastened to at least one of the plates (e.g., side plates 300) using fastening means. In an embodiment, the coupling sections 530 may not only include the coupling portions 532, but may also function to work in concert with the first barrier section 510 and the second barrier section 520 to block heat transfer from the top portion of the second cell 100_2 to the top portions of the first and third cells 100_1 and 100_3.

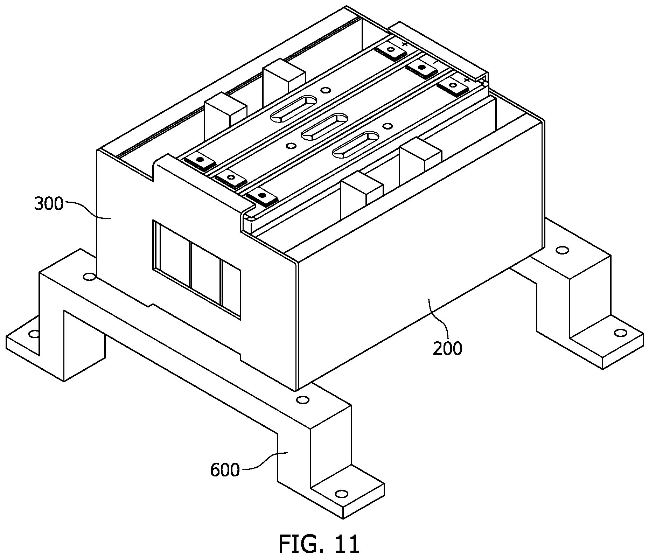

FIG. 10 illustrates a perspective diagram showing an example of the support 600 according to embodiments of the present disclosure, and FIG. 11 illustrates an example in which the support 600 in FIG. 10 is applied to a simplified battery module. The support 600 may support the bottom portion of at least one of the plates 200 and 300 supporting the outermost sides of the cell stack such that the bottom surface of the cell is spaced from a reference plane on which the simplified battery module is placed (e.g., the support 600 may be positioned between a bottom of the cell stack and the reference plane supporting the simplified battery module), thereby blocking heat transfer from the target cell to adjacent cells through the bottom surface of the cell.

Referring to FIG. 10, the support 600 may include one or more columns 610_1 and 610_2. According to an embodiment, the support 600 may include a first support portion 600_1 and a second support portion 600_2, and each of the first support portion 600_1 and the second support portion 600_2 may include two or more columns 610_1 and 610_2 and a support bar 620 connected to at least one of the two or more columns 610_1 and 610_2. The columns 610_1 and 610_2 included in the support 600 may space at least one of the plates 200 and 300 from the reference plane on which the simplified battery module is placed, and at least one of the plates 200 and 300 may be placed on the support bar 620.

According to an embodiment, at least a portion of the bottom surface of the cell stack may be exposed to the outside, e.g., a portion of the bottom surface of the cell stack between the support bars 620 of the support 600 that does not contact the support bars 620 may be exposed to the outside. That is, the module housing may not be applied to at least a portion of the bottom surface of the cell stack. Because the columns 610_1 and 610_2 of the support 600 space at least one of the plates 200 and 300 from the reference plane on which the simplified battery module rests, the cell stack may be positioned at a predetermined height from the reference plane, and an empty space may be formed below at least the exposed portion of the bottom surface of the cell stack (e.g., at least a portion of the bottom surfaces of the target cell and/or the adjacent cell). Accordingly, heat transfer from the target cell to the adjacent cell through the bottom portion of the cell may be blocked.

According to an embodiment, each of the support bars 620 may include coupling portions 622 for coupling to at least one of the plates 200 and 300. For example, the supports 620 may be coupled to the side plates 300. For example, each of the side plates 300 may include a body supporting opposite sides of the cell stack and a first coupling section bent inwardly (i.e., toward the cell stack) from a portion of the body and provided with first coupling portions. Herein, at least a portion of the first coupling section of the side plate 300 may be in contact with at least a portion of the support bar 620, and the coupling portions 622 of the support bar 620 and the first coupling portions of the side plate 300 may be fastened to each other using fastening means.

In another example, the support bars 620 may be coupled to the end plates 200. For example, each of the end plates 200 may include a body supporting an outermost side of the cell stack in the cell arrangement direction of the cell stack and an end plate coupling section bent inwardly (i.e., toward the cell stack) from a portion of the body and provided with end plate coupling portions. Herein, at least a portion of the end plate coupling section of the end plate 200 may be in contact with at least portions of the support bar 620, and the coupling portions 622 of the support 620 and the end plate coupling portions of the end plate 200 may be fastened to each other using engagement means. The supports 620 and the end/side plates 200 and 300 have been described above as being coupled using fastening means, but the supports 620 and the end/side plates 200 and 300 may be coupled using any suitable coupling method, e.g., welding or the like.

According to an embodiment, the simplified battery module may further include a bottom barrier disposed below the cell stack to block heat transfer to adjacent cells through the bottom portion of the cell stack. For example, the bottom barrier may be disposed in an empty space below the cell stack defined by the support 600. The bottom barrier may include a plate-shaped bottom barrier section positioned below and between a target cell and an adjacent cell. For example, the bottom barrier section may be positioned below an insulating sheet disposed between the target cell and an adjacent cell. The bottom barrier section may block heat transfer to the bottom portion of the adjacent cell through the bottom portion of the cell stack.

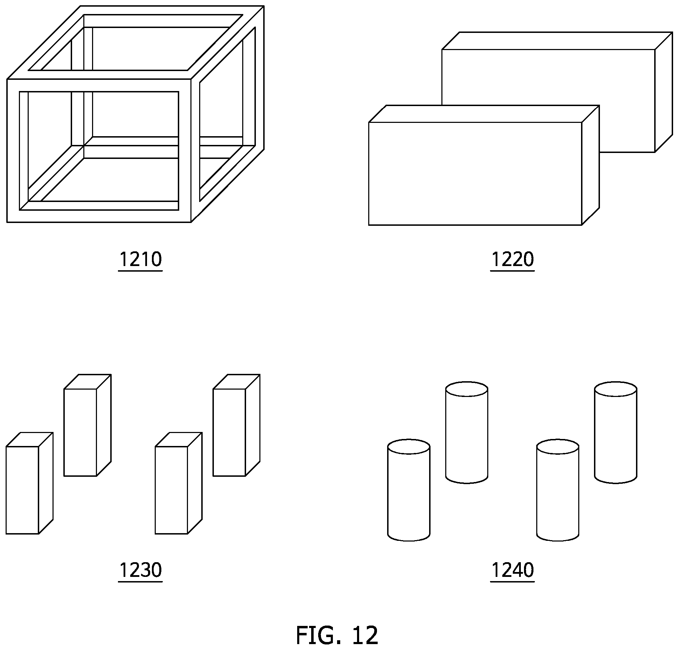

FIG. 12 illustrates an example of a support according to various embodiments of the present disclosure. In addition to the supports described above with reference to FIGS. 10 and 11, various other shapes of support may be applied to the simplified battery module. The support may have any shape allowing the cell stack to be spaced upwardly from a reference plane on which the simplified battery module is placed so that an empty space is formed below the cell stack.

Examples of supports according to various embodiments of the present disclosure are shown in FIG. 12. For example, a support 1210 may have a shape of a hollow cuboidal frame. In another example, a support 1220 may include two prismatic columns spaced apart from each other a predetermined distance. In yet another example, a support 1230 may include four prismatic columns spaced apart from each other a predetermined distance. In still another example, a support 1240 may include four columns spaced apart from each other a predetermined distance. Each of the various shapes of supports shown in FIG. 12 may include one or more columns, thereby spacing the cell stack upwardly from a reference plane on which the simplified battery module is placed. In addition, each of the various support shapes shown in FIG. 12 may lack a component in at least a portion of the region below the cell stack, such that an empty space is formed in at least the portion of the region below the cell stack.

By way of summation and review, secondary cells may generate large amounts of heat during charge/discharge and may also be exposed to abnormal operating conditions, also known as thermal runaways or thermal events. In this case, heat may propagate to adjacent cells. To prevent heat from propagating to adjacent cells, insulating sheets may be provided between cells. To measure the heat propagation prevention performance of the insulating sheet provided between cells, the performance of the insulating sheet may be evaluated in a simplified battery module under conditions similar to an actual module.

An aspect of the present disclosure is to provide a simplified battery module configured to improve the reliability of performance evaluation for an insulating sheet. That is, according to some embodiments of the present disclosure, by maximizing the blocking of heat transfer through the bottom portion and/or the top portion of the battery cell in the simplified battery module, the reliability of the evaluation of the thermal propagation blocking performance of the insulating sheet may be improved.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure and the claims and their equivalents, below.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. A simplified battery module (10), comprising:
a cell stack including a target cell (100_1) subjected to heating and an adjacent cell (100_2) positioned adjacent to the target cell (100_1);
an insulating sheet (160) between the target cell (100_1) and the adjacent cell (100_2);
a plurality of plates (200, 300) configured to support outermost sides of the cell stack; and
a barrier (400) on a top of the cell stack, the barrier (400) being configured to block heat transfer through a top portion of the cell stack to the adjacent cell (100_2).

2. The simplified battery module (10) according to claim 1, wherein the barrier (400) comprises a plate-shaped barrier section (410) positioned above and between the target cell (100_1) and the adjacent cell (100_2), the barrier section (410) being configured to block heat transfer from a top portion of the target cell (100_1) to a top portion of the adjacent cell (100_2).

3. The simplified battery module (10) according to claim 2, wherein the barrier (400) further comprises a barrier coupling section (420) bent from the barrier section (410), the barrier coupling section (420) comprising a barrier coupling portion (422) coupled to at least one of the plurality of plates (200, 300).

4. The simplified battery module (10) according to claim 3, wherein:
the plurality of plates (200, 300) includes side plates (300), each of the side plates (300) comprising:
a body (310) positioned at and configured to support a corresponding one of opposite sides of the cell stack, and
a first coupling section (320) extending from a portion of the body (310) and comprising a first coupling portion (322),
at least a portion of the barrier coupling section (420) of the barrier (400) is in contact with at least a portion of the first coupling section (320) of each of the side plates (300), and
the barrier coupling portion (422) of the barrier (400) and the first coupling portion (322) of each of the side plates (300) are fastened to each other via a fastener.

5. The simplified battery module (10) according to claim 1 or 2, wherein the barrier (400) includes barrier coupling portions (422) coupled to at least one of the plurality of plates (200, 300).

6. The simplified battery module (10) according to claim 5, wherein each of the barrier coupling portions (422) comprises a through-hole, the barrier coupling portions (422) being fastened to at least one of the plurality of plates (200, 300) via the through-hole.

7. The simplified battery module (10) according to claim 5 or 6, wherein the barrier coupling portions (422) are coupled to side plates (300) among the plurality of plates (200, 300), the side plates (300) being at opposite sides of the cell stack.

8. The simplified battery module (10) according to claim 1 or 2, wherein the plurality of plates (200, 300) comprises side plates (300) supporting opposite sides of the cell stack, the barrier (400) being integral with the side plates (300).

9. The simplified battery module (10) according to any one of claims 1 to 3 and 5 to 8, further comprising a support (600, 1210, 1220, 1230, 1240) configured to support a bottom portion of at least one of the plurality of plates (200, 300), and a bottom surface of the cell stack being spaced from a reference surface on which the simplified battery module (10) is placed.

10. The simplified battery module (10) according to any one of claims 1 to 9, further comprising a bottom barrier below the cell stack configured to block heat transfer through a bottom portion of the cell stack to the adjacent cell (100_2).

11. The simplified battery module (10) according to claim 9, wherein at least a portion of the bottom surface of the cell stack is exposed to an outside, and an empty space is below the portion of the bottom surface of the cell stack exposed to the outside.

12. The simplified battery module (10) according to claim 9 or 11, wherein the support (600, 1210, 1220, 1230, 1240) comprises at least one column (610_1, 610_2) spacing at least one of the plurality of plates (200, 300) from the reference surface.

13. The simplified battery module (10) according to claim 12, wherein the support (600, 1210) comprises:
two or more columns (610_1, 610_2) configured to space at least one of the plurality of plates (200, 300) from the reference surface; and
a support bar (620) connected to the two or more columns (610_1, 610_2), at least one of the plurality of plates (200, 300) being on the support bar (620).

14. The simplified battery module (10) according to claim 13, wherein the support bar (620) comprises a support bar coupling portion (622) coupled to at least one of the plurality of plates (200, 300).

15. The simplified battery module (10) according to claim 14, wherein:
the plurality of plates (200, 300) include side plates (300), each of the side plates (300) comprising:
a body (310) configured to support a corresponding one of opposite sides of the cell stack, and
a second coupling section (330) extending from a portion of the body (310) and comprising a second coupling portion (332),
at least a portion of the second coupling section (330) of each of the side plates (300) is in contact with at least a portion of the support bar (620), and
the support bar coupling portion (622) of the support bar (620) and the second coupling portion (332) of the side plate (300) are fastened to each other via a fastener.
